# EUROPEAN PATENT APPLICATION

(11) **EP 4 718 838 A1**
(43) Date of publication of application: **01.04.2026**
(21) Application number: 25199286.3
(22) Date of filing: 01.09.2025
(51) Int. Cl.: H04N 7/18, G06T 7/292, G06V 20/52, G08B 13/196

(54) **SYSTEMS AND METHODS FOR LOAD BALANCING IN A VIDEO SURVEILLANCE SYSTEM**

(30) Priority: 25.09.2024 US 202418896356
(71) Applicant: HONEYWELL INTERNATIONAL INC., Charlotte, NC 28202 (US)
(72) Inventor: DHAYALAN, Sivasanthanam, Charlotte, 28202 (US); KANNAIYAN, Karthikeyan, Charlotte, 28202 (US); JOSEPH, Jeslin Paul, Charlotte, 28202 (US)
(74) Representative: Haseltine Lake Kempner LLP

(57) **Abstract**

A first video camera identifies an object of interest in a video frame of a video stream captured by the first video camera. A region of interest (ROI) is cropped out in the video frame of the video stream that corresponds to the object of interest, wherein the cropped-out region including less than all of the video frame of the video stream. The cropped-out region of interest (ROI) of the video frame of the video stream is sent to a second video camera and the second video camera executes a video analytics algorithm on the cropped-out region of interest (ROI) of the video frame of the video stream, resulting in a video analytics result. The second video camera sends the video analytics result to the first video camera.

## Description

### TECHNICAL FIELD

The present disclosure relates generally to video surveillance systems, and more particularly to balancing workloads in a video surveillance system.

### BACKGROUND

Video surveillance systems can include a large number of video cameras, with each of the video cameras producing a video stream. A video camera may include a variety of different video analytics algorithms that the video camera may use in analyzing the video stream captured by the video camera. In some cases, there may be a desire to perform multiple video analytics algorithms on a particular video stream or even a particular video frame within the particular video stream. The video camera may have processing bandwidth limitations that can impact how many video analytics algorithms can be run simultaneously by the video camera. At the same time, other video cameras within the video surveillance system may have available processing bandwidth because of, for example, a lack of activity detected in the video stream of the other video cameras. What would be desirable are systems and methods for load balancing between video cameras within a video surveillance system. What would be desirable are systems and methods by which a first video camera can solicit assistance from a second video camera to run one or more designated video analytics algorithms that the first video camera currently lacks the available processing bandwidth to handle.

### SUMMARY

The present disclosure relates generally to video surveillance systems, and more particularly to balancing workloads in a video surveillance system. An example may be found in a method for load balancing video analytic processing among two or more of a plurality of network connected video cameras, where each of the network connected video cameras include a video camera for capturing a respective video stream. The illustrative method includes a first video camera of the plurality of network connected video cameras identifying an object of interest in a video frame of a video stream captured by the first video camera. A region of interest (ROI) is cropped out in the video frame of the video stream that corresponds to the object of interest, wherein the cropped-out region including less than all of the video frame of the video stream. The cropped-out region of interest (ROI) of the video frame of the video stream is then sent to a second video camera of the plurality of network connected video cameras and the second video camera of the plurality of network connected video cameras executes a video analytics algorithm on the cropped-out region of interest (ROI) of the video frame of the video stream, resulting in a video analytics result. The second video camera of the plurality of network connected video cameras sends the video analytics result to the first video camera of the plurality of network connected video cameras, a Network Video Recorder and/or another device.

Another example may be found in a surveillance system. The surveillance system includes a first video camera, a network, and a second video camera that is operatively coupled to the first video camera via the network. The first video camera is configured to capture a video stream and process the video stream to identify a motion region in a video frame of the video stream that corresponds to motion in the video frame, identify an object of interest that correspond to the motion region in the video frame, crop out a region of interest (ROI) in the video frame that corresponds to the object of interest (e.g. bounding box of the object of interest), and send the cropped-out region of interest (ROI) of the video frame to the second video camera via the network. The second video camera is configured to receive the cropped-out region of interest (ROI) of the video frame from the first video camera via the network, execute a video analytics algorithm on the cropped-out region of interest (ROI) of the video frame of the video stream captured by the first video camera, resulting in a video analytics result, and output the video analytics result via the network.

Another example may be found in a method for load balancing video analytic processing among two or more of a plurality of network connected video cameras, each network connected video camera including a video camera for capturing a respective video stream and processing resources. The illustrative method includes a first video camera of the plurality of network connected video cameras identifying an object of interest in a video frame of a video stream captured by the first video camera, and the first video camera determining whether to execute a video analytics algorithm on the object of interest to identify further characteristics of the object of interest. When it is determined to execute the video analytics algorithm on the object of interest, the first video camera determines whether the first video camera has sufficient idle processing resources to perform the video analytics algorithm on the object of interest, and if so, the first video camera executing the video analytics algorithm on the object of interest. If the first video camera does not have sufficient idle processing resources to perform the video analytics algorithm on the object of interest, the first video camera identifies a second video camera of the plurality of network connected video cameras that has sufficient idle processing resources to perform the video analytics algorithm on the object of interest, and sends a cropped-out region of interest (ROI) in the video frame of the video frame of the video stream captured by the first video camera to the second video camera. In turn, the second video camera receives the cropped-out region of interest (ROI) of the video frame from the first video camera, executes the video analytics algorithm on the cropped-out region of interest (ROI) of the video frame of the video stream captured by the first video camera, resulting in a video analytics result, and returns the video analytics result to the first video camera.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative video surveillance system;
Figures 2A and 2B are flow diagrams that together show an illustrative method for load balancing video analytic processing among two or more video cameras;
Figure 3 is a flow diagram showing an illustrative method for load balancing video analytic processing among two or more video cameras; and
Figure 4 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

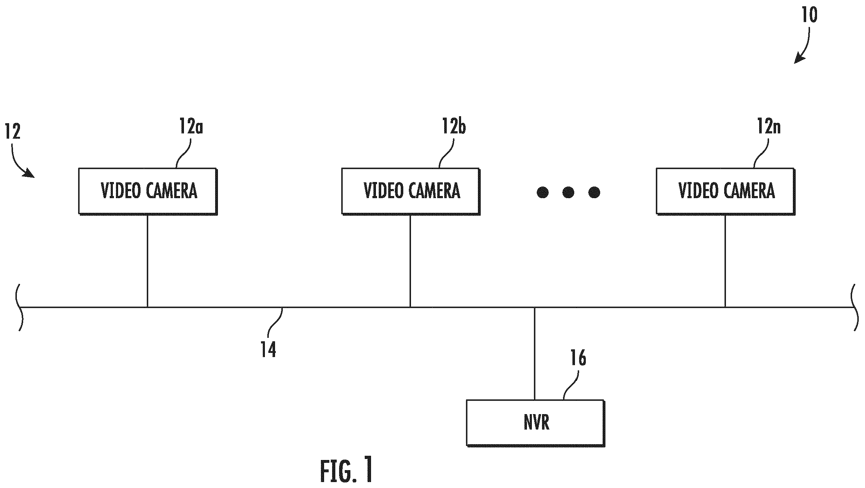

Figure 1 is a schematic block diagram showing an illustrative video surveillance system 10. The illustrative video surveillance system 10 includes a number of video cameras 12, individually labeled as 12a, 12b and through 12n. The video surveillance system 10 may include any number of video cameras 12, and in some cases may include tens, hundreds or even thousands of video cameras 12. Each of the video cameras 12 may be capable of capturing a video stream and perform one or more different video analytics algorithms on the captured video stream. Each of the video cameras 12 may be considered as being configured to communicate via a network 14, and thus may be considered as being network connected video cameras. The network 14 may be a LAN (local area network) or a WAN (wide area network). In some cases, the network 14 may include a LAN and a WAN via one or more network components. In some cases, the network 14 may include the Internet. The illustrative video surveillance system 10 includes an NVR (network video recorder) 16 that is connected via the network 14 and that is configured to store video streams provided to the NVR 16 by any of the video cameras 12.

The video camera 12a may be considered as being a first video camera and the video cameras 12b may be considered as being a second video camera. It will be appreciated that the designations "first" and "second" are arbitrary, and may refer to any two of the video cameras 12. For example, the video camera 12a may be configured to capture a video stream and to process the captured video stream. The captured video stream may be processed in order to identify a motion region in a video frame of the video stream that corresponds to motion in the video frame, and in some cases identify an object of interest that correspond to the motion region in the video frame. The captured video stream may be processed to crop out a region of interest (ROI) in the video frame that corresponds to the object of interest and to send the cropped-out region of interest (ROI) of the video frame to the second video camera (such as the video camera 12b) via the network 14. In turn, the video camera 12b may be configured to receive the cropped-out region of interest (ROI) of the video frame from the first video camera 12a via the network 14, and execute a video analytics algorithm on the cropped-out region of interest (ROI) of the video frame of the video stream captured by the first video camera 12, resulting in a video analytics result. The video camera 12b may then output the video analytics result via the network 14. In some cases, the video camera 12b may be configured to output the video analytics result to the video camera 12a via the network 14. In some cases, the video camera 12b may be configured to output the video analytics result to the NVR 16 via the network 14. In some cases, the video camera 12b may be configured to output the video analytics result to the video camera 12a via the network 14 and to the NVR 16 via the network 14.

In some cases, the video analytics result may include one or more labels describing the object of interest. The one or more labels may be associated with a time stamp in the video stream. The second video camera 12b may be configured to output the video analytics result to the video camera 12a via the network 14, and the video camera 12a may be configured to integrate the one or more labels into the live stream of the video stream captured by the video camera 12a. This may include superimposing the labels over the live stream adjacent the object of interest and substantially align in time based on the time stamps. In some cases, there may be a delay of a frame or two before the labels appear in the live stream, but this is acceptable in many cases.

In some cases, the video camera 12b may be configured to output the video analytics result via the network 14 to the NVR 16, which records the video stream captured by the video camera 12a. The NVR 16 may be configured to receive the video analytics result from the video camera 12b (or the video camera 12a) and integrate the one or more labels into the recorded video stream captured by the video camera 12a. This may include superimposing the labels over the video frame(s) of the recorded video stream adjacent the object of interest and aligned in time based on the time stamps. In this case, there may be no delay in the labels appearing in the recorded video stream.

In some cases, the video camera 12a may be configured to send metadata to the video camera 12b that identifies the video analytics algorithm from a plurality of predetermined video analytics algorithm that is to be executed by the second video camera 12b on the cropped-out region of interest (ROI) of the video frame of the video stream captured by the video camera 12a. In some cases, the video camera 12a may include processing resources that have a current resource utilization level, and the video camera 12a may be configured to determine that the current resource utilization level of the processing resources of the video camera 12a exceeds a threshold utilization level before sending the cropped-out region of interest (ROI) of the video frame of the video stream to the video camera 12b. In some cases, the threshold utilization level may be dependent on the video analytics algorithm that is to be executed on the cropped-out region of interest (ROI) of the video frame of the video stream. For example, an object classification video analytics algorithm may require more processing resources than a facial recognition video analytics algorithm.

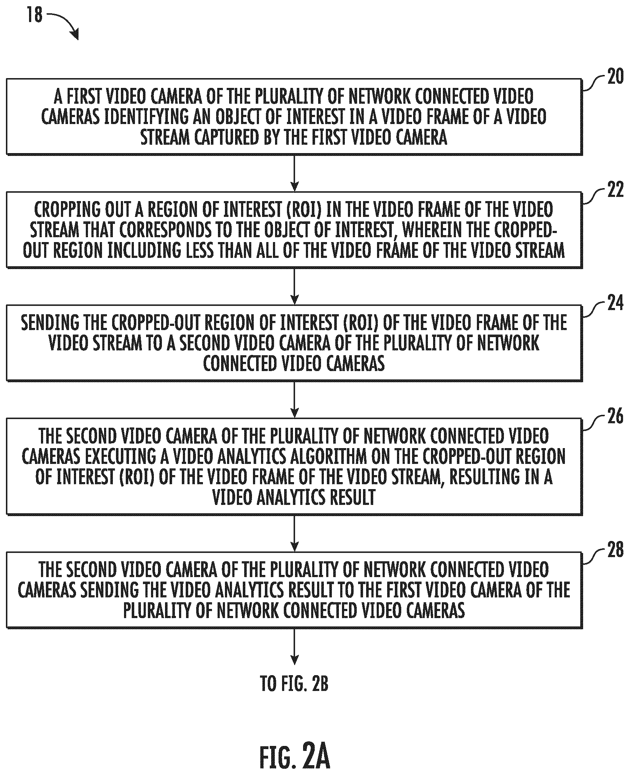

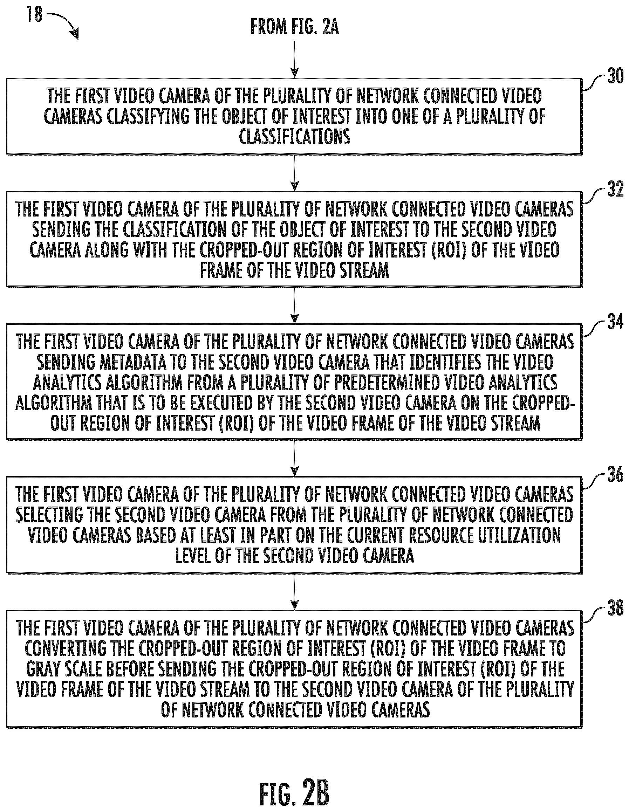

Figures 2A and 2B are flow diagrams that together show an illustrative method 18 for load balancing video analytic processing among two or more of a plurality of network connected video cameras (such as the video camera 12a and the video camera 12b), each network connected video camera including a video camera for capturing a respective video stream. The illustrative method 18 includes a first video camera of the plurality of network connected video cameras identifying an object of interest in a video frame of a video stream captured by the first video camera, as indicated at block 20. In some cases, identifying the object of interest in the video frame of the video stream captured by the first video camera may include identifying a region of pixels in the video frame of the video stream that differ from corresponding pixels in a reference video frame, and identifying the object of interest in the video frame as corresponding to the region of pixels in the video frame of the video stream that differ from the corresponding pixels in the reference video frame.

The first video camera crops out a region of interest (ROI) in the video frame of the video stream that corresponds to the object of interest, wherein the cropped-out region includes less than all of the video frame of the video stream, as indicated at block 22. The first video camera sends the cropped-out region of interest (ROI) of the video frame of the video stream to a second video camera of the plurality of network connected video cameras, as indicated at block 24. In turn, the second video camera of the plurality of network connected video cameras executes a video analytics algorithm on the cropped-out region of interest (ROI) of the video frame of the video stream, resulting in a video analytics result, as indicated at block 26. The second video camera of the plurality of network connected video cameras sends the video analytics result to the first video camera of the plurality of network connected video cameras, as indicated at block 28.

In some cases, the first video camera of the plurality of network connected video cameras may include processing resources that have a current resource utilization level, and the first video camera may determine that the current resource utilization level of the processing resources of the first video camera exceeds a threshold utilization level before sending the cropped-out region of interest (ROI) of the video frame of the video stream to the second video camera of the plurality of network connected video cameras. In some cases, the threshold utilization level may be dependent on the video analytics algorithm that is to be executed on the cropped-out region of interest (ROI) of the video frame of the video stream. For example, an object classification video analytics algorithm may require more processing resources than a facial recognition video analytics algorithm. In some cases, when the first video camera determines that the current resource utilization level of the processing resources of the first video camera does not exceed the threshold utilization level, the first video camera executes the video analytics algorithm on the cropped-out region of interest (ROI) of the video frame of the video stream and does not send the cropped-out region of interest (ROI) of the video frame of the video stream to the second video camera of the plurality of network connected video cameras.

In some cases, and continuing on Figure 2B, the illustrative method 18 may include the first video camera of the plurality of network connected video cameras classifying the object of interest into one of a plurality of classifications, as indicated at block 30. For example, the first video camera may perform a cursory object classification of the object of interest (e.g. person, car, dog, etc.). The first video camera of the plurality of network connected video cameras may send the classification of the object of interest to the second video camera along with the cropped-out region of interest (ROI) of the video frame of the video stream, as indicated at block 32. In some cases, the first video camera of the plurality of network connected video cameras may send metadata to the second video camera that identifies the video analytics algorithm from a plurality of predetermined video analytics algorithm that is to be executed by the second video camera on the cropped-out region of interest (ROI) of the video frame of the video stream, as indicated at block 34.

In some cases, each of the plurality of network connected video cameras may include processing resources that have a respective current resource utilization level, and each of the plurality of network connected video cameras may make their respective current resource utilization level known to the other of the plurality of network connected video cameras. In some cases, the first video camera of the plurality of network connected video cameras may select the second video camera from the plurality of network connected video cameras based at least in part on the current resource utilization level of the second video camera, as indicated at block 38. In some cases, the first video camera of the plurality of network connected video cameras may convert the cropped-out region of interest (ROI) of the video frame to gray scale before sending the cropped-out region of interest (ROI) of the video frame of the video stream to the second video camera of the plurality of network connected video cameras. This may reduce the network bandwidth required to send the cropped-out region of interest (ROI) to the second video camera over the network, and may reduce the processing resources of the second video camera required to execute the designated video analytics algorithm. Little accuracy is lost when using gray scale video frames versus to full color video frames for many video analytics algorithms.

In some cases, the video analytics result sent by the second video camera to the first video camera may include one or more labels describing one or more characteristics of the object of interest, wherein the first video camera integrates the one or more labels into a live stream of the video stream captured by the first video camera. In some cases, the video analytics result sent by the second video camera may include one or more labels describing one or more characteristics of the object of interest, and the first video camera may be operatively coupled to a Network Video Recorder (NVR) that records the video stream captured by the first video camera. The NVR may receive the video analytics result and may integrate the one or more labels into the recorded video stream captured by the first video camera.

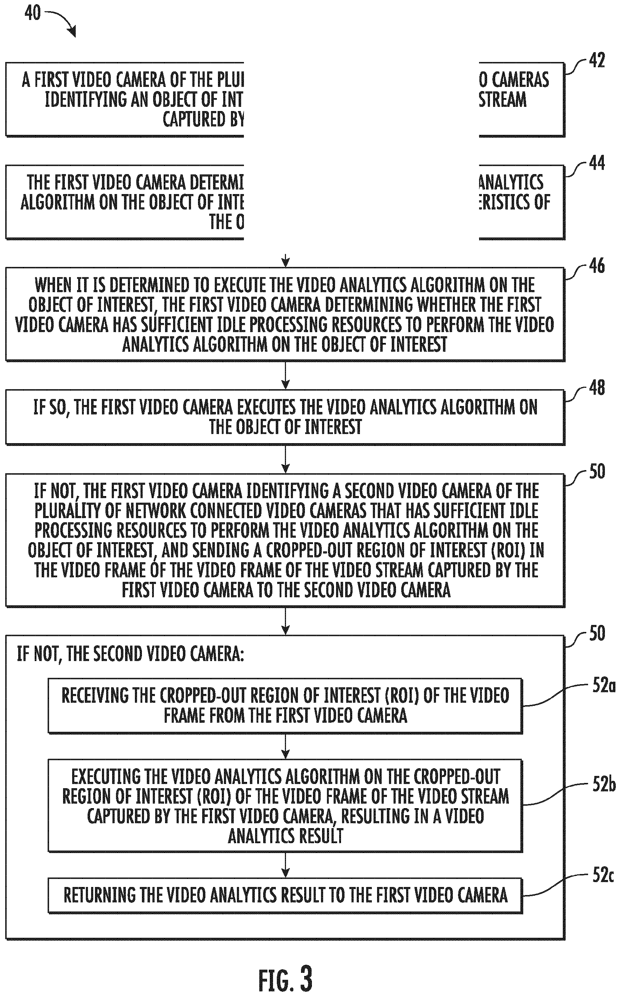

Figure 3 is a flow diagram showing an illustrative method 40 for load balancing video analytic processing among two or more of a plurality of network connected video cameras, each network connected video camera including a video camera for capturing a respective video stream and processing resources. The illustrative method 40 includes a first video camera of the plurality of network connected video cameras identifying an object of interest in a video frame of a video stream captured by the first video camera, as indicated at block 42. In some cases, the first video camera may perform a cursory object classification of the object of interest (e.g. person, car, dog, etc.). The first video camera determines whether to execute a video analytics algorithm on the object of interest to identify further characteristics of the object of interest, as indicated at block 44. For example, the first video camera may determine that when the object of interest is classified as a person, that a facial recognition video analytics algorithm should be executed on the object of interest to identify the person. When it is determined to execute the video analytics algorithm on the object of interest, the first video camera determines whether the first video camera has sufficient idle processing resources to perform the video analytics algorithm on the object of interest, as indicated at block 46. If so, the first video camera executes the video analytics algorithm on the object of interest, as indicated at block 48.

However, if a determination is made that the first video camera does not have sufficient idle processing resources, the first video camera identifies a second video camera of the plurality of network connected video cameras that has sufficient idle processing resources to perform the video analytics algorithm on the object of interest, and sends a cropped-out region of interest (ROI) in the video frame of the video frame of the video stream captured by the first video camera to the second video camera, as indicated at block 50. The second video camera then takes several actions, as indicated at block 52. The second video camera receives the cropped-out region of interest (ROI) of the video frame from the first video camera, as indicated at block 52a. The second video camera then executes the video analytics algorithm on the cropped-out region of interest (ROI) of the video frame of the video stream captured by the first video camera, resulting in a video analytics result, as indicated at block 52b. In this example, the second video camera returns the video analytics result to the first video camera, as indicated at block 52c.

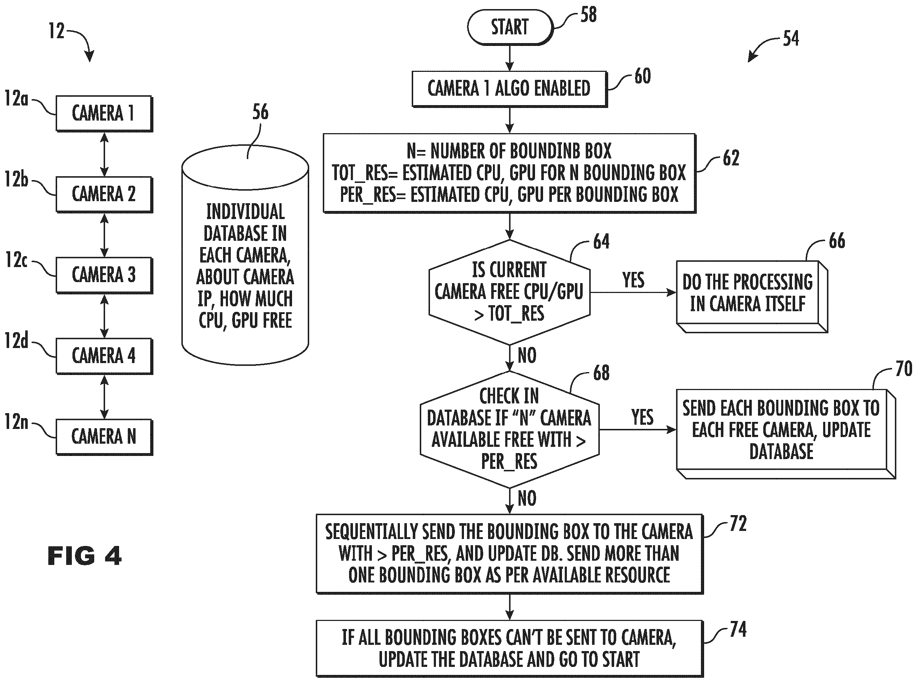

Figure 4 is a flow diagram showing an illustrative method 54. It will be appreciated that a number of video cameras 12 may be present, individually labeled here as 12a, 12b, 12c, 12d and through 12n. Each of the video cameras 12 includes a database 56 that tracks available or idle CPU (central processing unit) and/or GPU (graphical processing unit) processing resources for each of the number of video cameras 12. This information may be repeatedly updated over a network connecting the number of video cameras 12. The method 54 begins at a start block 58. An algorithm for the video camera 12a is enabled, as indicated at block 60. At block 62, a calculation indicates how many bounding boxes have been created (e.g. how many objects of interest have been identified), and calculations are made as to the processing resource required for processing each bounding box and cumulatively for processing all N bounding boxes. A determination is made at decision block 64 as to whether the current video camera 12a has sufficient free processing resources. If so, the current video camera 12a does the processing itself.

However, if the current video camera 12a does not have sufficient free processing resources, control passes to decision block 68, where a determination is made as to which of the "N" cameras have sufficient processing resources available to process one or more of the bounding boxes. Control passes to block 70, where each bounding box is sent to a corresponding free camera for processing, and the database 56 is updated. If a free camera cannot be found for some of the bounding boxes (temporarily orphaned bounding boxes), control passes to block 72, where the temporarily orphaned bounding boxes are sequentially sent to the video cameras as processing resources become available. If a particular video camera has more free processing resources, more than one bounding box may be sent to that video camera. If all bounding boxes can't be sent for some reason, the database 56 is updated, at indicated at block 74, and control reverts to the start block 58.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

**1.** A method for load balancing video analytic processing among two or more of a plurality of network connected video cameras (12a, 12b, 12c), each network connected video camera including a video camera for capturing a respective video stream, the method comprising:
a first video camera of the plurality of network connected video cameras identifying an object of interest in a video frame of a video stream captured by the first video camera;
cropping out a region of interest (ROI) in the video frame of the video stream that corresponds to the object of interest, wherein the cropped-out region including less than all of the video frame of the video stream;
sending the cropped-out region of interest (ROI) of the video frame of the video stream to a second video camera of the plurality of network connected video cameras;
the second video camera of the plurality of network connected video cameras executing a video analytics algorithm on the cropped-out region of interest (ROI) of the video frame of the video stream, resulting in a video analytics result; and
the second video camera of the plurality of network connected video cameras sending the video analytics result to the first video camera of the plurality of network connected video cameras.

**2.** The method of claim 1, wherein identifying the object of interest in the video frame of the video stream captured by the first video camera comprises:
identifying a region of pixels in the video frame of the video stream that differ from corresponding pixels in a reference video frame; and
identifying the object of interest in the video frame as corresponding to the region of pixels in the video frame of the video stream that differ from the corresponding pixels in the reference video frame.

**3.** The method of either of claims 1 or 2, comprising:
the first video camera of the plurality of network connected video cameras classifying the object of interest into one of a plurality of classifications; and
the first video camera of the plurality of network connected video cameras sending the classification of the object of interest to the second video camera along with the cropped-out region of interest (ROI) of the video frame of the video stream.

**4.** The method of any of claims 1-3, comprising:
the first video camera of the plurality of network connected video cameras sending metadata to the second video camera that identifies the video analytics algorithm from a plurality of predetermined video analytics algorithm that is to be executed by the second video camera on the cropped-out region of interest (ROI) of the video frame of the video stream.

**5.** The method of any of claims 1-4, wherein the first video camera of the plurality of network connected video cameras comprises processing resources that have a current resource utilization level, and wherein the first video camera determining that the current resource utilization level of the processing resources of the first video camera exceeds a threshold utilization level before sending the cropped-out region of interest (ROI) of the video frame of the video stream to the second video camera of the plurality of network connected video cameras.

**6.** The method of claim 5, wherein the threshold utilization level is dependent on the video analytics algorithm that is to be executed on the cropped-out region of interest (ROI) of the video frame of the video stream.

**7.** The method of claim 5, wherein when the first video camera determines that the current resource utilization level of the processing resources of the first video camera does not exceed the threshold utilization level, the first video camera executing the video analytics algorithm on the cropped-out region of interest (ROI) of the video frame of the video stream and not sending the cropped-out region of interest (ROI) of the video frame of the video stream to the second video camera of the plurality of network connected video cameras.

**8.** The method of any of claims 1-7, wherein each of the plurality of network connected video cameras comprises processing resources that have a respective current resource utilization level, and wherein each of the plurality of network connected video cameras makes their respective current resource utilization level known to all other of the plurality of network connected video cameras.

**9.** The method of claim 8, comprising the first video camera of the plurality of network connected video cameras selecting the second video camera from the plurality of network connected video cameras based at least in part on the current resource utilization level of the second video camera.

**10.** The method of any of claims 1-9, comprising the first video camera of the plurality of network connected video cameras converting the cropped-out region of interest (ROI) of the video frame to gray scale before sending the cropped-out region of interest (ROI) of the video frame of the video stream to the second video camera of the plurality of network connected video cameras.

**11.** The method of any of claims 1-10, wherein the video analytics result sent by the second video camera to the first video camera includes one or more labels describing one or more characteristics of the object of interest, wherein the first video camera integrating the one or more labels into a live stream of the video stream captured by the first video camera.

**12.** The method of any of claims 1-11, wherein the video analytics result sent by the second video camera includes one or more labels describing one or more characteristics of the object of interest, and wherein the first video camera is operatively coupled to a Network Video Recorder (NVR) (16) that records the video stream captured by the first video camera, the NVR receiving the video analytics result and integrating the one or more labels into the recorded video stream captured by the first video camera.

**13.** A surveillance system comprising:
a first video camera (12a);
a network (14);
a second video camera (12b) operatively coupled to the first video camera via the network;
the first video camera configured to:
capture a video stream;
process the video stream to:
identify a motion region in a video frame of the video stream that corresponds to motion in the video frame;
identify an object of interest that correspond to the motion region in the video frame;
crop out a region of interest (ROI) in the video frame that corresponds to the object of interest;
send the cropped-out region of interest (ROI) of the video frame to the second video camera via the network;
the second video camera is configured to:
receive the cropped-out region of interest (ROI) of the video frame from the first video camera via the network;
execute a video analytics algorithm on the cropped-out region of interest (ROI) of the video frame of the video stream captured by the first video camera, resulting in a video analytics result; and
output the video analytics result via the network.

**15.** A method for load balancing video analytic processing among two or more of a plurality of network connected video cameras (12a, 12b, 12c), each network connected video camera including a video camera for capturing a respective video stream and processing resources, the method comprising:
a first video camera of the plurality of network connected video cameras identifying an object of interest in a video frame of a video stream captured by the first video camera;
the first video camera determining whether to execute a video analytics algorithm on the object of interest to identify further characteristics of the object of interest;
when it is determined to execute the video analytics algorithm on the object of interest, the first video camera determining whether the first video camera has sufficient idle processing resources to perform the video analytics algorithm on the object of interest, and if so, the first video camera executing the video analytics algorithm on the object of interest, and if not:
the first video camera identifying a second video camera of the plurality of network connected video cameras that has sufficient idle processing resources to perform the video analytics algorithm on the object of interest, and sending a cropped-out region of interest (ROI) in the video frame of the video frame of the video stream captured by the first video camera to the second video camera;
the second video camera:
receiving the cropped-out region of interest (ROI) of the video frame from the first video camera;
executing the video analytics algorithm on the cropped-out region of interest (ROI) of the video frame of the video stream captured by the first video camera, resulting in a video analytics result; and
returning the video analytics result to the first video camera.
